# EUROPEAN PATENT SPECIFICATION

(11) **EP 2 757 115 B1**
(45) Date of publication and mention of the grant of the patent: **24.01.2018**
(21) Application number: 12832483.7
(22) Date of filing: 12.09.2012
(51) Int. Cl.: C08G 18/08, G02B 1/04, G02B 3/00

(54) **METHOD FOR PRODUCING URETHANE OPTICAL MEMBER**
VERFAHREN ZUR HERSTELLUNG EINES OPTISCHEN ELEMENTS AUS URETHAN
PROCÉDÉ DE FABRICATION D'UN ÉLÉMENT OPTIQUE D'URÉTHANE

(30) Priority: 12.09.2011 JP 2011198236
(43) Date of publication of application: 23.07.2014
(73) Proprietor: HOYA CORPORATION, Tokyo, 161-8525 (JP)
(72) Inventor: KOUSAKA, Masahisa, Tokyo 161-8525 (JP); OKAMOTO, Yasuhisa, Tokyo 161-8525 (JP)
(74) Representative: Hoffmann Eitle
(86) International application number: PCT/JP2012/073356
(87) International publication number: WO 2013/039114

(56) References cited:
- EP-A1- 2 246 378
- EP-A1- 2 746 822
- EP-A1- 2 746 823
- WO-A1-2009/098887
- JP-A- H02 232 603
- JP-A- 2001 330 701
- JP-A- 2005 121 679
- US-A1- 2010 075 154

## Description

### Technical Field

The present invention relates to a method for producing a urethane optical member. More specifically, the present invention relates to a method for producing a urethane optical member using an aromatic polyisocyanate that is solid at 25°C (ordinary temperature) and a polythiol.

### Background Art

Plastics have been used as an optical member, such as a spectacle lens, due to advantages including lightweight as compared to glass, excellent processability, and high safety with non-breakability.

For example, it has been known that a spectacle plastic lens that has a high refractive index and a high Abbe number and is excellent in transparency is obtained through polymerization reaction of a compound having an epithio group and a polyisocyanate compound or a polythiol compound used as raw material monomers (see, for example, PTL 1) .

There has been disclosed, as an example using an aromatic polyisocyanate, a polymerizable composition for an optical member containing tolylene diisocyanate, hexamethylene diisocyanate and a polythiol (see, for example, PTL 2). PTL 3 relates to polymerizable compositions for optical materials, in particular plastic lenses (paragraph [0003], claims 1 and 10). In the example 17, 4-mercapto-1,8-dimercapto-3,6-dithiaoctane is reacted with 1,3-phenylene diisocyanate.

### Citation List

### Patent Literatures

PTL 1: JP-A-2001-330701
PTL 2: WO 2009/098887
PTL 3: US20100075154 A1 Summary of Invention Technical Problem

In general, in the case where a solid aromatic polyisocyanate compound and a polythiol compound are mixed, they are incompatible with each other, and the resulting resin contains a solid content. In the case where a solid polyisocyanate compound is simply melted by heating and mixed with a polythiol, an opaque resin is formed through a heating process from a low temperature as in an ordinary production process of a plastic lens. The polyisocyanates disclosed in PTLs 1 and 2 are materials that are liquid at ordinary temperature, and an optical material using an aromatic polyisocyanate compound that is solid at ordinary temperature is not disclosed therein.

An object of the present invention is to provide a method for producing a urethane optical member that is excellent in transparency free of haze with high productivity by using an aromatic polyisocyanate compound that is solid at ordinary temperature and a polythiol compound.

### Solution to Problem

As a result of earnest investigations made by the present inventors for achieving the object, it has been found that a transparent resin free of haze may be obtained in a short curing time in such a manner that an aromatic polyisocyanate compound that is solid at ordinary temperature is melted by heating and then mixed with a specific polythiol compound, and a resulting mixed liquid is cured without heating while controlling a liquid temperature of the mixed liquid to a temperature that is not lower than a deposition temperature of the aromatic polyisocyanate compound and is not higher than a decomposition temperature of a resulting cured product, and thus the present invention has been completed.

The present invention relates to methods for producing a urethane optical member of the following items (1) to (5).
(1) A method for producing a urethane optical member, containing curing a raw material monomer mixture containing an aromatic polyisocyanate compound and a polythiol compound, the aromatic polyisocyanate compound having a melting point of 25°C or more, the polythiol compound being at least one compound selected from pentaerythritol tetrakis(2-mercaptoacetate), pentaerythritol tetrakis(3-mercaptopropionate), 2,5-bis(mercaptomethyl)-1-4-ditiane, 4-mercaptomethyl-1,8-dimercapto-3,6-dithiaoctane and 4,8-, 4,7- or 5,7-dimercaptomethyl-1,11-dimercapto-3,6,9-trithiaundecane, the method containing a step 1 and a step 2 below:
   step 1: a step of melting the aromatic polyisocyanate compound by heating to a temperature that is not lower than a melting point thereof; and
   step 2: a step of mixing the aromatic polyisocyanate compound melted by heating in the step 1 and the polythiol compound to provide a mixed liquid, and curing the mixed liquid without heating to provide a cured product, while controlling a liquid temperature of the mixed liquid to a temperature that is not lower than a deposition temperature of the aromatic polyisocyanate compound and is not higher than a decomposition temperature of the cured product.
(2) The method for producing a urethane optical member according to the item (1), wherein the aromatic polyisocyanate compound is at least one compound selected from 1,3-phenylene diisocyanate, 1,4-phenylene diisocyanate, 4,4'-diphenylmethane diisocyanate, 4,4'-diisocyanato-3,3'-dimethyldiphenyl, 1,5-naphthalene diisocyanate and 2,6-naphthalene diisocyanate.
(3) The method for producing a urethane optical member according to the item (1) or (2), wherein the step 2 contains reaction injection molding.
(4) The method for producing a urethane optical member according to any one of the items (1) to (3), wherein the polythiol compound used has been heated in advance to a temperature that is not lower than the melting point of the aromatic polyisocyanate compound in the step 2.
(5) The method for producing a urethane optical member according to any one of the items (1) to (4), wherein the optical member is a plastic lens.

### Advantageous Effects of Invention

According to the production method of the present invention, a urethane optical member that is excellent in transparency free of haze may be produced in a short period of time with high efficiency even by using an aromatic polyisocyanate compound that is solid at ordinary temperature as a raw material.

### Description of Embodiments

### Polyisocyanate Compound

Examples of the aromatic polyisocyanate compound that is solid at ordinary temperature as a raw material in the present invention include at least the following aromatic polyisocyanate compounds, each of which are an aromatic polyisocyanate compound having a melting point of 25°C or more. In the present specification, the term "aromatic polyisocyanate compound" simply means an aromatic polyisocyanate compound having a melting point of 25°C or more.

Examples of the aromatic polyisocyanate compound used include 1,3-phenylene diisocyanate, 1,4-phenylene diisocyanate, 4,4'-diphenylmethane diisocyanate, 4,4'-diisocyanato-3,3'-dimethyldiphenyl, 1,5-naphthalene diisocyanate and 2,6-naphthalene diisocyanate. The aromatic polyisocyanate compound may be used solely or as a mixture of two or more kinds thereof.

Among the aforementioned examples, 4,4'-diphenylmethane diisocyanate and 4,4'-diisocyanato-3,3'-dimethyldiphenyl are preferably used, and 4,4'-diphenylmethane diisocyanate is more preferably used, from the standpoint of the good handleability due to the low melting point thereof.

As a polyisocyanate compound, in addition to the aromatic polyisocyanate compound, an aliphatic or alicyclic polyisocyanate compound and an aromatic polyisocyanate compound that is liquid at ordinary temperature may be used in such a range that does not impair the advantageous effects of the present invention.

Examples of the aliphatic polyisocyanate compound used include 1,6-hexamethylene diisocyanate, lysine ester triisocyanate, mesitylene triisocyanate, 1,3,6-hexamethylene triisocyanate and m-xylylene diisocyanate, and examples of the alicyclic polyisocyanate compound used include isophorone diisocyanate, bis(isocyanatomethyl)cyclohexane, dicyclohexylmethane 4,4'-diisocyanate, 1,3-cyclohexane diisocyanate, 1,4-cyclohexane diisocyanate, 1,2-bis(isocyanatomethyl)cyclohexane, 1,3-bis(isocyanatomethyl)cyclohexane, 1,4-bis(isocyanatomethyl)cyclohexane, 1,3,5-tris(isocyanatomethyl)cyclohexane, bicycloheptane triisocyanate and bis(isocyanatomethyl)dicycloheptane.

Examples of the aromatic polyisocyanate compound that is liquid at ordinary temperature include 2,4-tolylene diisocyanate and 2,6-tolylene diisocyanate.

The aliphatic polyisocyanate compound, the alicyclic polyisocyanate compound and the aromatic polyisocyanate compound that is liquid at ordinary temperature may be used solely or as a mixture of two or more kinds thereof.

### Polythiol Compound

In the present invention, the polythiol compound used as a raw material is at least one compound selected from pentaerythritol tetrakis(2-mercaptoacetate), pentaerythritol tetrakis(3-mercaptopropionate), 2,5-bis(mercaptomethyl)-1-4-ditiane, 4-mercaptomethyl-1,8-dimercapto-3,6-dithiaoctane and 4,8-, 4,7- or 5,7-dimercaptomethyl-1,11-dimercapto-3,6,9-trithiaundecane. The polythiol compound may be used solely or as a mixture of two or more kinds thereof. The use of the polythiol compound provides a urethane optical member having high transparency and a high refractive index.

A polythiol compound other than the aforementioned polythiol compounds may be used in such a range that does not impair the advantageous effects of the present invention. Examples thereof used include ethylene glycol bis(2-mercaptoacetate), trimethylolpropane tris(2-mercaptoacetate), trimethylolpropane tris(3-mercaptopropionate), trimethylolethane tris(2-mercaptoacetate), trimethylolethane tris(3-mercaptopropionate), dichloroneopentyl glycol bis(3-mercaptopropionate), dibromoneopentyl glycol bis(3-mercaptopropionate), dipentaerythritol hexakis(2-mercaptoacetate, 4,5-bismercaptomethyl-1,3-dithiane, bis((2-mercaptoethyl)thio)-3-mercaptopropane and bis(mercaptomethyl)-3,6,9-trithiaundecane-1,11-dithiol.
The polythiol compound may be used solely or two or more kinds thereof may be used.

When the mixing ratio of the polyisocyanate compound and the polythiol compound is from 0.5 to 2.0 in terms of molar ratio of NCO group/SH group, the curing reaction may generally proceed, and the ratio is preferably from 0.95 to 1.05. When the molar ratio of NCO group/SH group is 0.95 or more, substantially no unreacted NCO group may remain, and when the ratio is 1.05 or less, substantially no unreacted SH group may remain. An ideal polymer containing a small amount of unreacted groups may be obtained within the range.

In the present invention, a raw material monomer other than the polyisocyanate compound and the polythiol compound may be used, and those that are ordinarily used as a raw material monomer for a plastic lens may be used without any particular limitation.

In the present invention, a known additive may be used without any particular limitation, and examples of the additive include a curing catalyst, an ultraviolet ray absorbent and a mold releasing agent.

### Curing Catalyst

The curing catalyst used is preferably an organic tin compound, and examples thereof include dibutyl tin diacetate, dibutyl tin dilaurate, dibutyl tin dichloride, dimethyl tin dichloride, monomethyl tin trichloride, trimethyl tin chloride, tributyl tin chloride, tributyl tin fluoride and dimethyl tin dibromide. The curing catalyst may be used solely or as a mixture of two or more kinds thereof.

The mixing ratio of the curing catalyst is generally in a range of from 0.001 to 1.00 part by mass per 100 parts by mass in total of the polyisocyanate compound and the polythiol compound. The curing rate may be controlled easily within the range.

### Ultraviolet Ray Absorbent

Examples of the ultraviolet ray absorbent used include various benzophenone compounds, such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone and 2,2'-dihydroxy-4-methoxybenzophenone; various benzotriazole compound, such as 2-(2'-hydroxy-5'-methylphenyl)benzotriazole, 2-(2'-hydroxy-3'5'-di-t-butylphenyl)-5-chlorobenzotriazole, 2-(2'-hydroxy-3'-t-butyl-5'-methylphenyl)-5-chlorobenzotriazole, 2-(2'-hydroxy-3',5'-di-t-amylphenyl)benzotriazole, 2-(2'-hydroxy-3',5'-di-t-butylphenyl)benzotriazole, 2-(2'-hydroxy-5'-t-butylphenyl)benzotriazole, 2-(2'-hydroxy-5'-t-octylphenyl)benzotriazole and 2-(2-hydroxy-4-octyloxyphenyl)benzotriazole; dibenzoylmethane, and 4-tert-butyl-4'-methoxybenzoylmethane. The ultraviolet ray absorbent may be used solely or as a mixture of two or more kinds thereof.

The mixing ratio of the ultraviolet ray absorbent is generally in a range of from 0.01 to 10.00 parts by mass per 100 parts by mass in total of the polyisocyanate compound and the polythiol compound. The range is more preferably from 0.05 to 1.00, and when the mixing ratio is 0.05 or more, a sufficient ultraviolet ray absorbing effect may be obtained, and when the ratio is 1.00 or less, the resin may not be colored remarkably.

### Mold Releasing Agent

Examples of the mold releasing agent include a phosphate monoester compound, such as isopropyl acid phosphate, butyl acid phosphate, octyl acid phosphate, nonyl acid phosphate, decyl acid phosphate, isodecyl acid phosphate, tridecyl acid phosphate, stearyl acid phosphate, propylphenyl acid phosphate and butylphenyl acid phosphate; and a phosphate diester compound, such as diisopropyl acid phosphate, dibutyl acid phosphate, dioctyl acid phosphate, diisodecyl acid phosphate, bis(tridecyl acid phosphate), distearyl acid phosphate, dipropylphenyl acid phosphate, dibutylphenyl acid phosphate and butoxyethyl acid phosphate. The mold releasing agents may be used solely or as a mixture of two or more kinds thereof.

The mixing ratio of the mold releasing agent is generally in a range of from 0.01 to 1.00 parts by mass per 100 parts by mass in total of the polyisocyanate compound and the polythiol compound. The mold releasing may be effectively facilitated within the range, and difficulty may not occur on processing.

### Method for producing Urethane Optical Member

The method for producing a urethane optical member of the present invention contains the step 1 and the step 2 below:
step 1: a step of melting the aromatic polyisocyanate compound by heating to a temperature that is not lower than a melting point thereof; and
step 2: a step of mixing the aromatic polyisocyanate compound melted by heating in the step 1 and the polythiol compound to provide a mixed liquid, and curing the mixed liquid without heating to provide a cured product, while controlling a liquid temperature of the mixed liquid to a temperature that is not lower than a deposition temperature of the aromatic polyisocyanate compound and is not higher than a decomposition temperature of the cured product.

### Step 1

The method of melting the aromatic polyisocyanate compound by heating to a temperature that is not lower than the melting point thereof in the step 1 is not particularly limited as far as the aromatic polyisocyanate compound that is solid at ordinary temperature can be melted by heating to a temperature that is not lower than the melting point thereof, thereby converting the solid to liquid.

The aromatic polyisocyanate compound melted by heating in the step 1 is preferably defoamed from the standpoint of preventing the molded article from being foamed. The defoaming method is not particularly limited, and examples thereof include a vacuum stirring defoaming method. For preventing the temperature of the mixed liquid in the step 2 described later from being decreased, the aromatic polyisocyanate compound melted by heating in the step 1 may be maintained at a temperature higher than the heating temperature in the step 1 before the step 2.

### Step 2

In the step 2, the aromatic polyisocyanate compound melted by heating in the step 1 is mixed with the polythiol compound and the additives depending on necessity to provide a mixed liquid. The mixing order and the mixing method are not particularly limited as far as the raw materials can be mixed homogeneously, and it is preferred to provide the mixed liquid, for example, by a stirring mixing method with a mixing tank.

The polythiol compound is preferably heated in advance before mixing with the aromatic polyisocyanate compound to a temperature that is not lower than the melting point of the aromatic polyisocyanate compound for preventing the temperature of the mixing liquid from being decreased. The heated polythiol compound is preferably defoamed from the standpoint of preventing the molded article from being foamed. The defoaming method is not particularly limited, and examples thereof include a vacuum stirring defoaming method.

In the step 2, the mixed liquid is cured without heating to provide a cured product, and thereby the urethane optical member of the present invention can be produced.

The term "curing" herein means a phenomenon that the raw material monomer mixture substantially loses fluidity due to polymerization. For example, when the viscosity becomes 10,000 Pa·s or more, it may be determined that the fluidity is substantially lost, and the raw material monomer mixture is cured. For finishing the reaction completely, the resulting cured product may be heated.

In the step 2, the resulting mixed liquid is cured without heating in the state where the liquid temperature thereof is controlled to not lower than the deposition temperature of the aromatic polyisocyanate compound and not higher than the decomposition temperature of the cured product.

By controlling the liquid temperature within the temperature range without heating the mixed liquid, a transparent cured product free of haze may be obtained, and the cured product may be prevented from being deteriorated in properties due to the runaway reaction.

The liquid temperature of the mixed liquid is preferably from 60 to 150°C, and more preferably from 70 to 120°C, while depending on the kinds of the raw materials. Examples of the method for curing the mixed liquid without heating include a method of allowing the mixed liquid to stand at room temperature (25°C).

The deposition temperature of the aromatic polyisocyanate compound means the temperature, at which the molten aromatic polyisocyanate is recrystallized.

The decomposition temperature of the cured product means the temperature, at which the cured product is decomposed under heat. The temperature may be confirmed by thermogravimetric analysis with a thermal analysis equipment, or the like.

Examples of the method performing the step 2 include a method of injecting the mixed liquid, which is prepared by the aforementioned stirring mixing method, in a mold, and a reaction injection molding (RMI) method. Among these, the reaction injection molding method is preferred since the step 1 and the step 2 can be performed continuously.

In the step 2, the mixed liquid may be cured within 30 minutes, and the mixed liquid may be cured in a short period of time, specifically from 2 to 30 minutes, and further from 3 to 20 minutes, in terms of the period of from the start of mixing the aromatic polyisocyanate compound and the polythiol compound to the curing of the mixed liquid.

According to the production method of the present invention, a urethane optical member that is excellent in transparency free of haze may be produced with high efficiency even by using an aromatic polyisocyanate compound that is solid at ordinary temperature as a raw material.

A urethane optical member obtained by the present invention may be applied to various purposes, such as various plastic lenses for spectacles, cameras and the like, and a light emitting diode (LED). The urethane optical member is favorable particularly as an optical member including a spectacle lens, a camera lens and the like.

### Example

The present invention will be described with reference to examples, but the present invention is not limited thereto. In Examples and Comparative Examples, the properties were evaluated in the following manners.

### (1) Appearance

After mixing the raw materials, the resulting mixture was visually observed for appearance while allowing the mixture to stand at room temperature, and the cured product obtained after curing was visually observed under a fluorescent lamp in a dark room, thereby evaluating them for appearance color and transparency.
good: no white turbidity found
poor: white turbidity found

### (2) Maximum Temperature

The mixture was measured for the surface temperature thereof with a temperature sensor (HA-200E, produced by Anritsu Corporation) while allowing the mixture to stand at room temperature, and the highest temperature observed was designated as the maximum temperature. It was determined with the maximum temperature as to whether or not the temperature of the mixed liquid was not higher than the decomposition temperature. The decomposition temperature herein means the temperature, at which the thermal weight loss is 5%. The thermal weight loss was measured with a differential thermobalance (TG-8120, produced by Rigaku Corporation).

### Example 1

In 13.49 g of 4,4'-diphenylmethane diisocyanate (MDI) (melting point: 40°C) having been melted by heating to 60°C and defoamed in advance, 0.01 g of a mold releasing agent (butoxyethyl acid phosphate) and 0.04 g of dimethyl tin dichloride were dissolved.

The resulting MDI solution was maintained by heating to 60°C, to which 7.4 g of 2,5-bis(mercaptomethyl)-1,4-dithiane (DMMD) and 4.08 g of pentaerythritol tetrakis(2-mercaptoacetate) (PETMA) having been heated to 60°C and defoamed in advance were added under stirring at high speed, followed by further stirring at high speed, thereby providing a mixed liquid. The mixed liquid was allowed to stand at room temperature (25°C), thereby providing a cured product. The period of time from the start of mixing DMMD and PETMA with the MDI solution to the curing of the mixed liquid was 20 minutes. The mixture allowed to stand at room temperature and the resulting cured product were observed for the appearance and the cured state and measured for the maximum temperature. The results of evaluation of the properties in this example are shown in Table 1.

It was confirmed that the liquid temperature of the mixed liquid was not lower than the deposition temperature of MIDI since no deposition of MDI was observed until the curing of the mixed liquid. It was confirmed that the liquid temperature of the mixed liquid was not higher than the decomposition temperature of the cured product since the surface temperature of the mixture varied within a range of from 55 to 120°C, and the decomposition temperature of the cured product was 240°C as a result of the measurement of the thermal weight loss measured with a differential thermobalance (TG-8120, produced by Rigaku Corporation). For finishing the reaction completely, the cured product was heated to 120°C for 10 hours after curing.

### Example 2

In 2.1 g of 1,5-naphthalene diisocyanate (NDI) (melting point: 130°C) and 10.0 g of 4,4'-diphenylmethane diisocyanate (MDI) (melting point: 40°C) having been melted by heating to 150°C and defoamed in advance, 0.01 g of a mold releasing agent (butoxyethyl acid phosphate) and 0.03 g of dimethyl tin dichloride were dissolved.

The resulting mixed solution of NDI and MDI was maintained by heating to 130°C, to which 7.4 g of 2,5-bis(mercaptomethyl)-1,4-dithian (DMMD) and 4.08 g of pentaerythritol tetrakis(2-mercaptoacetate) (PETMA) having been heated to 50°C and defoamed in advance were added under stirring at high speed, followed by further stirring at high speed, thereby providing a mixed liquid. The mixed liquid was allowed to stand at room temperature, thereby providing a cured product. The period of time from the start of mixing PETMA with the NDI solution to the curing of the mixed liquid was 10 minutes. The mixture allowed to stand at room temperature and the resulting cured product were observed for the appearance and the cured state and measured for the maximum temperature, as similar to Example 1. The results of evaluation of the properties in this example are shown in Table 1. The surface temperature of the mixture varied within a range of from 90 to 150°C, and the decomposition temperature of the cured product was 240°C.

It was confirmed in the same manner as in Example 1 that the liquid temperature of the mixed liquid was controlled to the range that was not lower than the decomposition temperatures of NDI and MDI and was not higher than the decomposition temperature of the cured product. For finishing the reaction completely, the cured product was heated to 120°C for 10 hours after curing.

### Comparative Example 1

In 13.49 g of MDI having been melted by heating to 60°C and defoamed in advance, 0.01 g of a mold releasing agent (butoxyethyl acid phosphate) and 0.04 g of dimethyl tin dichloride were dissolved.

The resulting MDI solution was maintained by heating to 45°C, to which 7.4 g of DMMD and 4.08 g of PETMA having been heated to 40°C and defoamed in advance were added under stirring at high speed, followed by further stirring at high speed, thereby providing a mixed liquid. By allowing the mixed liquid to stand at room temperature (25°C), the liquid temperature of the mixture became the deposition temperature of MDI or lower, and the mixture was turbid in white, thereby providing a white turbid cured product. The period of time from the start of mixing DMMD and PETMA with the MDI solution to the curing of the mixed liquid was 60 minutes. The mixture allowed to stand at room temperature and the resulting cured product were observed for the appearance and the cured state and measured for the maximum temperature, as similar to Example 1. The results of evaluation of the properties in this example are shown in Table 1. The surface temperature of the mixture varied within a range of from 40 to 45°C.

**Table 1**

| | | Example 1 | Example 2 | Comparative Example 1 |
|---|---|---|---|---|
| Resin composition (g) | MDI | 13.49 | 10.0 | 13.49 |
| | NDI | - | 2.1 | - |
| | DMMD | 7.40 | 7.40 | 7.40 |
| | PETMA | 4.08 | 4.08 | 4.08 |
| Evaluation | Appearance on allowing to stand at room temperature | good | good | poor |
| | Appearance after curing | good | good | poor |
| | Maximum temperature (°C) | 120 | 150 | 45 |
| | Decomposition temperature (°C) | 240 | 240 | - |

### Industrial Applicability

According to the production method of the present invention, a urethane optical member that is excellent in transparency free of haze may be produced with high efficiency even by using an aromatic polyisocyanate compound that is solid at 25°C (ordinary temperature) as a raw material, and therefore the present invention is useful particularly in the field of a plastic lens, such as a spectacle lens and a camera lens.

## Claims

1. A method for producing a urethane optical member, comprising curing a raw material monomer mixture containing an aromatic polyisocyanate compound and a polythiol compound, the aromatic polyisocyanate compound having a melting point of 25°C or more, the polythiol compound being at least one compound selected from pentaerythritol tetrakis(2-mercaptoacetate), pentaerythritol tetrakis(3-mercaptopropionate), 2,5-bis(mercaptomethyl)-1-4-ditiane, 4-mercaptomethyl-1,8-dimercapto-3,6-dithiaoctane and 4,8-, 4,7- or 5,7-dimercaptomethyl-1,11-dimercapto-3,6,9-trithiaundecane, the method containing a step 1 and a step 2 below:
step 1: a step of melting the aromatic polyisocyanate compound by heating to a temperature that is not lower than a melting point thereof; and
step 2: a step of mixing the aromatic polyisocyanate compound melted by heating in the step 1 and the polythiol compound to provide a mixed liquid, and curing the mixed liquid without heating to provide a cured product, while controlling a liquid temperature of the mixed liquid to a temperature that is not lower than a deposition temperature of the aromatic polyisocyanate compound and is not higher than a decomposition temperature of the cured product.

2. The method for producing a urethane optical member according to claim 1, wherein the aromatic polyisocyanate compound is at least one compound selected from 1,3-phenylene diisocyanate, 1,4-phenylene diisocyanate, 4,4'-diphenylmethane diisocyanate, 4,4'-diisocyanato-3,3'-dimethyldiphenyl, 1,5-naphthalene diisocyanate and 2,6-naphthalene diisocyanate.

3. The method for producing a urethane optical member according to claim 1 or 2, wherein the step 2 contains reaction injection molding.

4. The method for producing a urethane optical member according to any one of claims 1 to 3, wherein the polythiol compound used has been heated in advance to a temperature that is not lower than the melting point of the aromatic polyisocyanate compound in the step 2.

5. The method for producing a urethane optical member according to any one of claims 1 to 4, wherein the optical member is a plastic lens.

## Patentansprüche

1. Verfahren zum Herstellen eines urethanbasierten optischen Elements, umfassend Härten einer Rohmaterial-Monomermischung, die eine aromatische Polyisocyanatverbindung und eine Polythiolverbindung enthält, wobei die aromatische Polyisocyanatverbindung einen Schmelzpunkt von 25°C oder mehr aufweist, die Polythiolverbindung wenigstens eine Verbindung ist, ausgewählt aus Pentaerythritoltetrakis(2-mercaptoacetat), Pentaerythritoltetrakis(3-mercaptopropionat), 2,5-Bis(mercaptomethyl)-1-4-ditian, 4-Mercaptomethyl-1,8-dimercapto-3,6-dithiaoctan und 4,8-, 4,7- oder 5,7-Dimercaptomethyl-1,11-dimercapto-3,6,9-trithiaundecan, wobei das Verfahren folgende Schritte 1 und 2 umfasst:
Schritt 1: einen Schritt, bei dem die aromatische Polyisocyanatverbindung durch Erhitzen auf eine Temperatur, die nicht tiefer ist als der Schmelzpunkt, geschmolzen wird; und
Schritt 2: einen Schritt, bei dem die durch Erhitzen beim Schritt 1 geschmolzene Polyisocyanatverbindung und die Polythiolverbindung vermischt werden, so dass eine vermischte Flüssigkeit bereitgestellt wird, und die vermischte Flüssigkeit ohne Erhitzen gehärtet wird, so dass ein gehärtetes Produkt bereitgestellt wird, während die Flüssigkeitstemperatur der vermischten Flüssigkeit auf einer Temperatur kontrolliert wird, die nicht tiefer als eine Abscheidungstemperatur der aromatischen Polyisocyanatverbindung und nicht höher als eine Zersetzungstemperatur des gehärteten Produkts ist.

2. Verfahren zum Herstellen eines urethanbasierten optischen Elements gemäß Anspruch 1, wobei die aromatische Polyisocyanatverbindung wenigstens eine Verbindung ist, ausgewählt aus 1,3-Phenylendiisocyanat, 1,4-Phenylendiisocyanat, 4,4'-Diphenylmethandiisocyanat, 4,4'-Diisocyanato-3,3'-dimethyldiphenyl, 1,5-Naphthalindiisocyanat und 2,6-Naphthalindiisocyanat.

3. Verfahren zum Herstellen eines urethanbasierten optischen Elements gemäß Anspruch 1 oder 2, wobei der Schritt 2 Reaktionsspritzgießen umfasst.

4. Verfahren zum Herstellen eines urethanbasierten optischen Elements gemäß einem der Ansprüche 1 bis 3, wobei die verwendete Polythiolverbindung im Voraus erhitzt worden ist auf eine Temperatur, die nicht tiefer als der Schmelzpunkt der aromatischen Polyisocyanatverbindung im Schritt 2 ist.

5. Verfahren zum Herstellen eines urethanbasierten optischen Elements gemäß einem der Ansprüche 1 bis 4, wobei das optische Element eine Kunststofflinse ist.

## Revendications

1. Procédé de fabrication d'un élément optique en uréthane, comprenant le durcissement d'un mélange de monomères de matière première contenant un composé polyisocyanate aromatique et un composé polythiol, le composé polyisocyanate aromatique ayant un point de fusion égal ou supérieur à 25 °C, le composé polythiol étant au moins un composé sélectionné parmi le tétrakis(2-mercaptoacétate) de pentaérythritol, le tétrakis(3-mercaptopropionate) de pentaérythritol, le 2,5-bis(mercaptométhyl)-1-4-ditiane, le 4-mercaptométhyl-1,8-dimercapto-3,6-dithiaoctane et le 4,8-, 4,7- ou 5,7-dimercaptométhyl-1,11-dimercapto-3,6,9-trithiaundécane, le procédé comprenant une étape 1 et une étape 2 ci-dessous :
étape 1 : une étape de fusion du composé polyisocyanate aromatique par chauffage à une température qui n'est pas inférieure à un point de fusion de celui-ci ; et
étape 2 : une étape de mélange du composé polyisocyanate aromatique fondu par chauffage dans l'étape 1 et du composé polythiol pour fournir un liquide mélangé, et de durcissement du liquide mélangé sans chauffage pour fournir un produit durci, tout en contrôlant une température de liquide du liquide mélangé à une température qui n'est pas inférieure à une température de dépôt du composé polyisocyanate aromatique et qui n'est pas supérieure à la température de décomposition du produit durci.

2. Procédé de fabrication d'un élément optique en uréthane selon la revendication 1, dans lequel le composé polyisocyanate aromatique est au moins un composé choisi parmi le diisocyanate de 1,3-phénylène, le diisocyanate de 1,4-phénylène, le diisocyanate de 4,4'-diphénylméthane, le 4,4'-diisocyanato-3,3'-diméthyldiphényle, le diisocyanate de 1,5-naphtalène et le diisocyanate de 2,6-naphtalène.

3. Procédé de fabrication d'un élément optique en uréthane selon la revendication 1 ou 2, dans lequel l'étape 2 contient un moulage par injection-réaction.

4. Procédé de fabrication d'un élément optique en uréthane selon l'une quelconque des revendications 1 à 3, dans lequel le composé polythiol utilisé a été préalablement chauffé à une température qui n'est pas inférieure au point de fusion du composé polyisocyanate aromatique dans l'étape 2.

5. Procédé de fabrication d'un élément optique en uréthane selon l'une quelconque des revendications 1 à 4, dans lequel l'élément optique est une lentille en plastique.
